# EUROPEAN PATENT APPLICATION

(11) **EP 1 400 331 A1**
(43) Date of publication of application: **24.03.2004**
(21) Application number: 03255826.4
(22) Date of filing: 17.09.2003
(51) Int. Cl.: B29C 45/17, B29C 45/00, H01R 43/24, B29L 31/36

(54) **Insert molded product and its mold**

(30) Priority: 17.09.2002 JP 2002270798
(71) Applicant: Kyosan Denki Co., Ltd., Sashima-gun, Ibaraki-pref., 306-0206 (JP)
(72) Inventor: Kikuchi, Ken, c/o Kyosan Denki Co., Ltd.,, Sashima-gun Ibaraki-pref. 306-0206 (JP)
(74) Representative: Senior, Alan Murray

(57) **Abstract**

To manufacture a connector (3) having a metal insert (1) by insert molding, the metal insert (1) is fixed to first and second fixing portions (14, 16) of dies 11 defining a resin injection chamber (12) therein. Resin is supplied from a resin supply passage (13) to the resin injection chamber (12). A crank passage 26, intervening between the resin supply passage (13) and the resin injection chamber (12), decelerates a flow velocity of the resin supplied into the resin injection chamber.

## Description

### BACKGROUND OF THE INVENTION

This invention relates to an insert molded product, such as various types of power connectors, which includes a thin metal insert being molded with a resin or comparable material.

Recently, many kinds of resin molded products are used in various apparatuses or devices. Preferably used for manufacturing the resin molded products is an insert molding method according to which resin is injected into a resin injection chamber defined by molding dies under a condition that a metallic part (i.e., metal insert) is supported in this chamber.

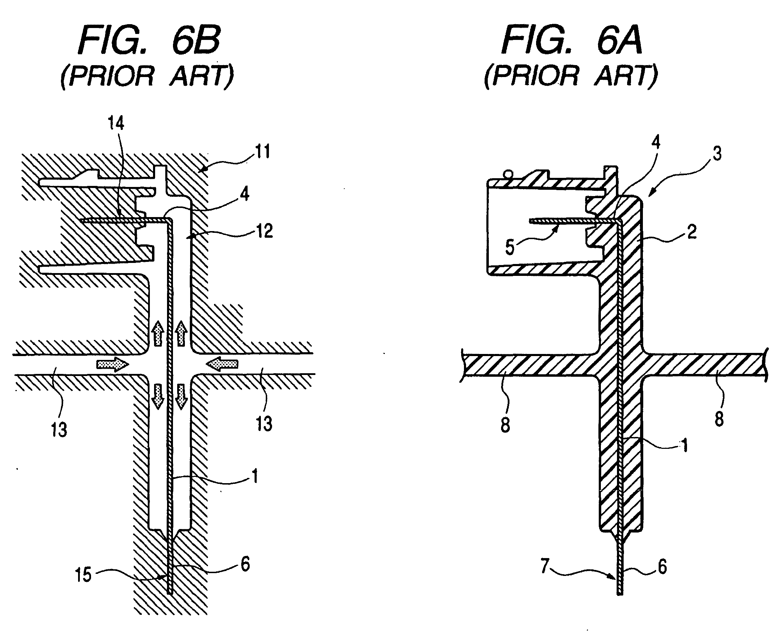

For example, as shown in Fig. 6A, a power connector 3 includes a thin metal insert 1 having both ends protruding from a resin main body 2 for connection with a plug or other power supplying member.

As shown in Fig. 6A, the metal insert 1 has a first end portion 4 and a second end portion 6 at its both ends. The first end portion 4 is bent perpendicularly to a longitudinal direction of the metal insert 1 so as to extend in the horizontal direction and embedded in the resin main body 2 except for a protruding portion serving as a first connecting terminal 5. The second end portion 6 extends straight downward in the longitudinal direction of the metal insert 1 and embedded in the resin main body 2 except for a protruding portion serving as a second connecting terminal 7. A resin flange 8 is integrally formed with the resin main body 2 at an intermediate portion thereof for holding the connector 3 at a predetermined position. The flange 8 has a disk shape extending in radial directions from the outer surface of the connector 3.

Fig. 6B is a cross-sectional view showing molding dies 11 used for insert molding the connector 3. As shown in Fig. 6B, the metal insert 1 is tightly supported beforehand in a resin injection chamber 12 defined by the coupled molding dies 11. The molding dies 11 have first and second fixing portions 14 and 15 for fixing the first and second end portions 4 and 5 of the metal insert 1. A resin is injected into the resin injection chamber 12 from a resin supply passage 13. The resin supply passage 13 also serves as a flange forming portion where the flange 8 is formed.

The resin supply passage 13, extending in the right and left directions in the drawing, is positioned at the mid height of a product to be insert molded. The resin rushes into the resin injection chamber 12 from right and left sides at the same time. As shown in Fig. 6B, each injected resin stream collides with the mid point of metal insert 1 and is bifurcated perpendicularly as up and low streams flowing in the clearance between the metal insert 1 and the molding dies 11. Then, the resin injection chamber 12 is completely filled with the injected resin.

In some cases, the flowing resin may not be injected into only one resin injection chamber 12. For example, for the purpose of simultaneously manufacturing various kinds of resin molded products, a number of resin injection chambers 12 are continuously connected via the resin supply passage 13. Especially, in recent years, many composite products are constituted to integrally form a plurality of members. In such a case, the resin flows sequentially into a plurality of resin injection chambers 12. The resin flows into a resin injection chamber after passing another chamber for forming another member.

The molding dies 11 generally consist of a plurality of separable parts so that a resin molded product is easily taken out of each resin injection chamber 12 after finishing the resin molding operation.

In manufacturing the insert molded product shown in Fig. 6A by fixing the metal insert 1 beforehand at both ends to the upper and lower end portions in the resin injection chamber 12 and then injecting the resin into the resin injection chamber 12 from the resin supply passage 13 positioned at substantially the mid height of the resin injection chamber 12 as shown in Fig. 6B, the thin metal insert 1 being tightly fixed at both ends thereof will receive balanced forces acting from the flowing resins at both surfaces as long as the resin supply passage 13 simultaneously supplies the resin into the resin injection chamber 12 from both sides as shown in Fig. 6B. In such a case, no problem will occur.

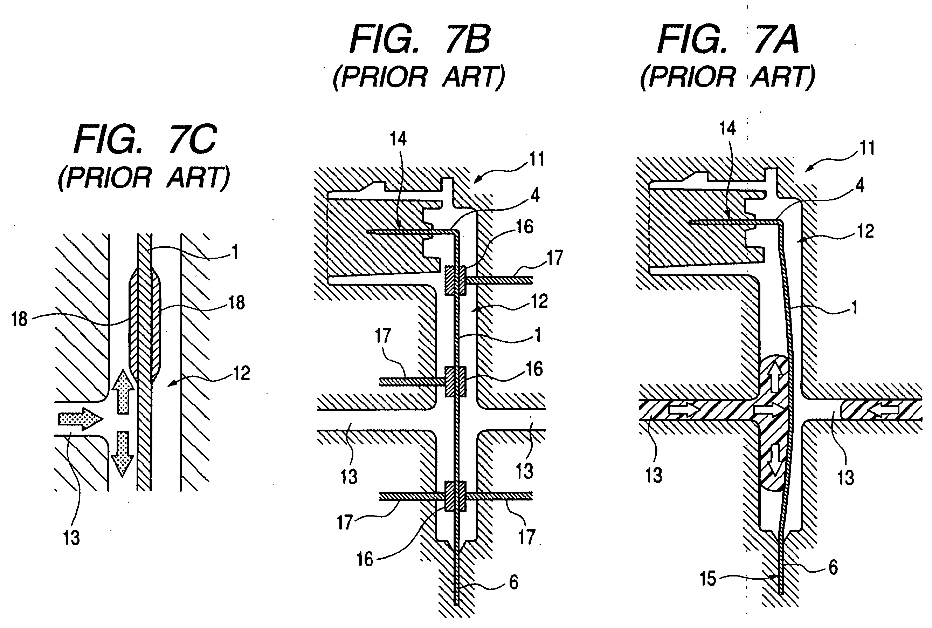

However, the timings of the resin streams rushing into the same resin injection chamber 12 from right and left sides via the resin supply passage 13 are not always synchronized. Especially, when the resin arrives from another resin injection chamber connected to this chamber, it is often that either one of the resin streams is delayed from the other due to difference in flow distance and flow resistance subjected in the process of reaching this resin injection chamber 12. For example, as shown in Fig. 7A, the resin stream of the left resin supply passage 13 rushes into the resin injection chamber 12 earlier than the resin stream of the right resin supply passage 13. At this moment, the metal insert 1 receives a unidirectional resin pressure acting only from the left side and accordingly causes a deformation.

In this case, the resin flows as shown in the drawing although part of the resin may enter into the behind side of the thin metal insert 1 depending on the condition of metal insert 1. At a later timing, the resin is also supplied from the right resin supply passage 13. However, depending on its entering timing, there will be the possibility that the resin injection chamber 12 is already filled with the resin. Although the example shown in the drawing is a case that the left resin supply passage 13 supplies the resin earlier than the right resin supply passage 13, the metal insert 1 will be deformed similarly even when the right resin supply passage 13 supplies the resin earlier than the left resin supply passage 13.

When the metal insert 1 is subjected to the unbalanced resin pressures acting from its right and left surfaces, there is the possibility that the metal insert 1 may be broken or cut depending on the difference of the pressures. Such damages will give serious influences to the resin molded product. Especially, when it is used as a power connector, damage of the metal insert 1 will give serious influences to the operations of an associated apparatus or device. For example, heat will be generated from the damaged portion. Or, it will be difficult to drive or actuate the associated apparatus or device. Furthermore, when it is used as a fuel pump connector of an automotive vehicle, the above-described breakage/cut and heat generation problems will cause serious problems in the automotive vehicle.

To solve the above-described problem that the thin metal insert 1 being tightly fixed at both ends thereof in the resin injection chamber 12 is deformed when it receives an unbalanced resin pressure acting at its mid portion, it may be possible to support the metal insert 1 by means of appropriate support members as shown in Fig. 7B. According to this method, for example, three insert-molded portions 16 are integrally provided beforehand on the metal insert 1 at appropriate portions mutually spaced in the longitudinal direction. The metal insert 1 is held at both ends in the molding dies 11, as described above.

The molding dies 11 have a plurality of support die fixing portions at the positions corresponding to the molded portions 16 held on the metal insert 1. Support dies 17 are fixed to the support die fixing portions. Each support die 17 has a distal end supporting a corresponding molded portion 16. Thus, the metal insert 1 is supported to the molding dies 11 via a plurality of support dies 17 each having the distal end supporting the metal insert 1 via the molded portion 16 and a proximal end fixed to the molding dies 11.

In disposing the support dies 17, their positions should be determined so as to support each molded portion 16 from an appropriate direction based on advanced tests for checking the possibility of causing deformation of metal insert 1 when subjected to the above-described resin flow. The number of support dies 17 should be determined considering the possibility of causing local deformations on the metal insert 1. For example, as shown in Fig. 7B, it will be necessary to support a lower portion of metal insert 1 via the molded portion 16 from both sides by the support dies 17.

As described above, using the support dies 17 presenting deformation of the metal insert 1 makes it possible to firmly support the metal insert 1 from desirable directions. However, using the support dies 17 is disadvantageous in that the support dies 17 leave deep holes extending inward from an outer surface of an insert molded product when the insert molded product is taken out of the molding dies 11. Each hole reaches the molded portion 16 and does not reach the surface of metal insert 1.

According to this arrangement, the bottom of respective holes is positioned closely to the metal insert 1. There is the possibility that insulation properties of the metal insert 1 will be worsened when the resin body is shrunken due to molding sink. In general, the insert molded product is subjected to molding sink which inherently occurs in a resin body with elapsing time. Thus, the metal insert may peel off the resin body at their contact surfaces due to molding sink and possibly cause a clearance or gap along their contact surfaces. If the clearance or gap formed when the metal insert peels off the resin body communicates with the hole, water will enter from the outside when this product is used in the outdoor. The metal insert will be subjected to corrosion. Furthermore, when this product is used as a container in which fuel flows, the liquid or gas components of the fuel will leak to the outside. Furthermore, using the support dies 17 is disadvantageous in that the manufacturing costs will increase.

On the other hand, the molding sink appears especially in a thick resin body irrespective of the presence of support dies 17. Accordingly, when the above-described metal insert 1 is insert molded, the metal insert 1 will peel off the resin body at their contact surfaces. In this case, a space in which the first end portion 4 is positioned may communicate with a space in which the second end portion 6 is positioned via a clearance formed when the metal insert 1 peels off the resin body. In such a case, water will enter into the product from the outside even in the case that no holes are formed in the resin body. The metal insert will be subjected to corrosion. The liquid or gas components will leak to the outside.

Especially, when this product is used as a component of a fuel pump equipped in a fuel tank of an automotive vehicle, immersion of water into the fuel tank is not preferable. Furthermore, once discharged from the fuel tank to the outside, the fuel will cause air pollution. Furthermore, corrosion of metal insert will lead to breakage of wire or malfunction of the fuel pump. This induces serious engine troubles.

To solve this problem, as shown in Fig. 7C, it may be desirable to apply an adhesive 18 on the surface of the metal insert 1 to secure appropriate bonding between the metal insert 1 and the resin body even when the above-described molding sink occurs. However, there is the possibility that the adhesive 18 will be removed when high-speed resin stream rushes into the resin injection chamber 12 from the resin supply passage 13. Thus, this problem needs to be solved, too.

### SUMMARY OF THE INVENTION

In view of the above-described problems, the present invention has an object to provide an insert molded product including a metal insert and molding dies used for manufacturing this insert molded product which are capable of preventing the metal insert from deforming or being pulled out of a fixing portion when subjected to a resin stream rushing into a resin injection chamber.

The present invention prevents a thin metal insert from deforming during an insert molding operation, according to which the metal insert is subjected to the resin pressure acting to its mid portion in the longitudinal direction when the resin is injected into a resin injection chamber defined in the molding dies in which the metal insert is fixed at both ends thereof, without requiring support dies for supporting the metal insert and also without increasing the manufacturing costs. Furthermore, even when an adhesive is applied on the metal insert to prevent the metal insert from peeling off the resin body, the present invention prevents the adhesive from being removed during the insert molding operation.

In order to accomplish the above and other related objects, the present invention prevents an insert molded member including a thin metal insert which is fixed at both ends in a rein injection chamber defined in molding dies, wherein a resistance giving bent portion is provided in a resin supply passage connected to the resin injection chamber.

Preferably, the resistance giving bent portion is formed by a thinning portion of a main body of the insert molded member.

Preferably, the insert molded member is formed by a resin supplied from a sub port preventing the metal insert from being pulled out of the molding dies in addition to a resin supplied from the resistance giving bent portion.

Furthermore, the present invention provides an insert molded product including a resin body and a metal insert molded at least partly in the resin body. The resin body has a first portion, a second portion, and a third portion intervening between the first portion and the second portion. The first portion of the resin body serves as a resin injection chamber in which the metal insert is supported when the insert molded product is manufactured by insert molding. The second portion of the resin body serves as a resin supply passage for supplying resin to the resin injection chamber when the insert molded product is manufactured by insert molding. And, the third portion of the resin body serves as a resin decelerating portion for decelerating a flow velocity of the resin supplied into the resin injection chamber when the insert molded product is manufactured by insert molding.

Preferably, a rib structure including a plurality of recesses is employed to reduce a substantial thickness of the first portion of the resin body, and the recesses serve as resin decelerating portion for decelerating a flow velocity of the resin supplied into the resin injection chamber when the insert molded product is manufactured by insert molding.

Furthermore, the present invention provides an insert molding apparatus for manufacturing an insert molded product having a metal insert molded at least partly in a resin body. Molding dies for forming the insert molded product includes a resin injection chamber, a resin supply passage, and a resin decelerating portion intervening between the resin injection chamber and the resin supply passage. The metal insert is supported in the resin injection chamber. The resin supply passage supplies resin to the resin injection chamber. And, the resin decelerating portion decelerates a flow velocity of the resin supplied into the resin injection chamber.

Preferably, the metal insert has a bent portion being bent perpendicularly to a longitudinal direction of the metal insert and having a distal end being fixed in a fixing portion. The molding dies have a sub port supplying an auxiliary resin stream to a behind surface of the metal insert. The sub port is located closer to the bent portion of the metal insert than an inlet port of the resin supply passage. The resin stream entering from the sub port reaches the bent portion of the metal insert earlier than the resin supplied from the resin supply passage. The resin stream has a function of pushing the bent portion of the metal insert against a thrust force acting when the resin entering from the resin supply passage collides with a front surface of the metal insert. Thus, it becomes possible to prevent the bent portion of the metal insert from being pulled out of the fixing portion of the molding dies.

### BRIEF DESCRIPTION OF THE DRAWINGS

The above and other objects, features and advantages of the present invention will become more apparent from the following detailed description which is to be read in conjunction with the accompanying drawings, in which:
Fig. 1A is a cross-sectional view showing an insert molded product in accordance with a first embodiment of the present invention;
Fig. 1B is a cross-sectional view showing molding dies used for manufacturing the insert molded product in accordance with the first embodiment of the present invention;
Fig. 2 is a cross-sectional view showing the arrangement of a resin flowing passage formed in the molding dies in accordance with the first embodiment of the present invention;
Fig. 3A is a cross-sectional view showing an insert molded product in accordance with a second embodiment of the present invention;
Fig. 3B is a cross-sectional view showing molding dies used for manufacturing the insert molded product in accordance with the second embodiment of the present invention;
Fig. 4A is a cross-sectional view showing an insert molded product in accordance with a third embodiment of the present invention;
Fig. 4B is a cross-sectional view showing molding dies used for manufacturing the insert molded product in accordance with the third embodiment of the present invention;
Fig. 5A is a cross-sectional view showing an insert molded product in accordance'with a fourth embodiment of the present invention;
Fig. 5B is a cross-sectional view showing molding dies used for manufacturing the insert molded product in accordance with the fourth embodiment of the present invention;
Fig. 6A is a cross-sectional view showing a conventional insert molded product;
Fig. 6B is a cross-sectional view showing molding dies used for manufacturing the conventional insert molded product shown in Fig. 6A;
Fig. 7A is a cross-sectional view explaining a problem of a conventional insert molding operation;
Fig. 7B is a cross-sectional view showing a conventional method for eliminating the problem explained with reference to Fig. 7A; and
Fig. 7C is a cross-sectional view showing an adhesive applied on a metal insert according to a conventional method.

### DESCRIPTION OF THE PREFERRED EMBODIMENTS

Preferred embodiments of the present invention will be explained hereinafter with reference to attached drawings.

### First Embodiment

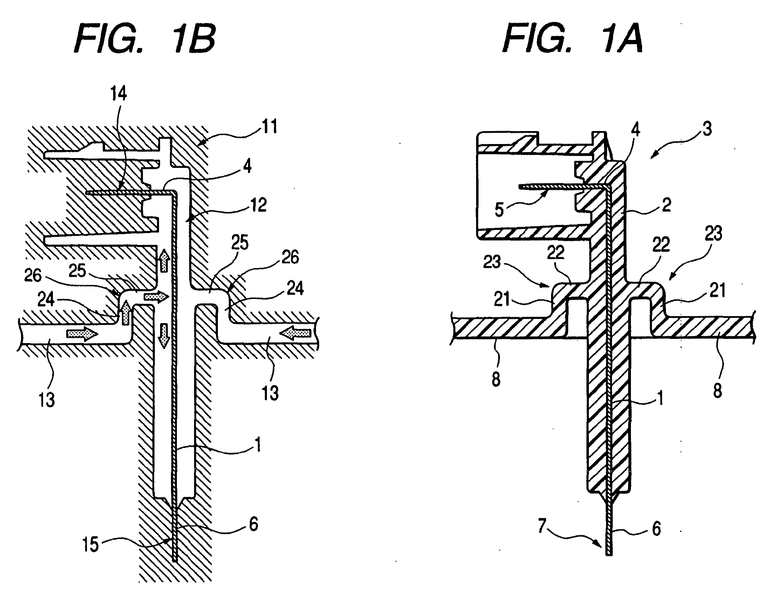

Fig. 1A shows a power connector 3 in accordance with a first embodiment, serving as an insert molded product of the present invention, which is different from the power connector 3 shown in Fig. 6A in that the resin flange 8 is connected to the rein main body 2 via a resin crank portion 23. The crank portion 23 consists of a first portion 21 and a second portion 22 which are continuous with each other and bent perpendicularly from each other.

Fig. 1B shows molding dies used for manufacturing the power connector 3 shown in Fig. 1A. As apparent from the drawing, the molding dies 11 of the first embodiment have a crank passage 26 consisting of a first passage 24 and a second passage 25 which are continuous with each other and bent perpendicularly from each other. The crank passage 26, serving as a resin decelerating portion, gives an appropriate flow resistance to the resin rushing into the resin injection chamber 12. In this respect, the crank passage 26 can be also referred to as a resistance giving bent portion.

The crank passage 26 is located at the downstream end of the resin supply passage 13 and is directly connected to the resin injection chamber 12. The resin supply passage 13 serves as a flange forming portion where the flange 8 of connector 3 is formed. The first passage 24 corresponds to the first portion 21 of connector 3, and the second passage 25 corresponds to the second portion 22 of connector 3.

According to the configuration of crank passage 26, the first passage 24 is bent perpendicularly to the resin supply passage 13 and accordingly decelerates the resin supplied from the resin supply passage 13. The second passage 25 is bent perpendicularly to the first passage 24 and accordingly decelerates the resin which is once decelerated by the first passage 24. Accordingly, the resin rushing into the resin injection chamber 12 is sufficiently decelerated in the crank passage 26 before it flows into the resin injection chamber 12. Accordingly, the resin pressure acting on the metal insert 1 is reduced. It becomes possible to prevent the thin metal insert 1 from being deformed. As the flow velocity of the resin is sufficiently decelerated before it flows into the resin injection chamber 12, it becomes possible to prevent the adhesive 18 from being removed off the metal insert 1 in a case that the adhesive 18 is applied on the metal insert 1 as shown in Fig. 7C.

As described above, according to the first embodiment of the present invention, there is no necessity of using reinforcing members such as the support dies for supporting the metal insert 1. Modification of the insert molded product is limited to only a narrow region of the insert molded product. It is possible to prevent a thin metal insert from being deformed by the rushing resin injected perpendicularly to the mid point of this metal insert tightly fixed in the resin injection chamber. It is also possible to prevent the adhesive from being removed off the metal insert. The manufacturing costs do not increase so much.

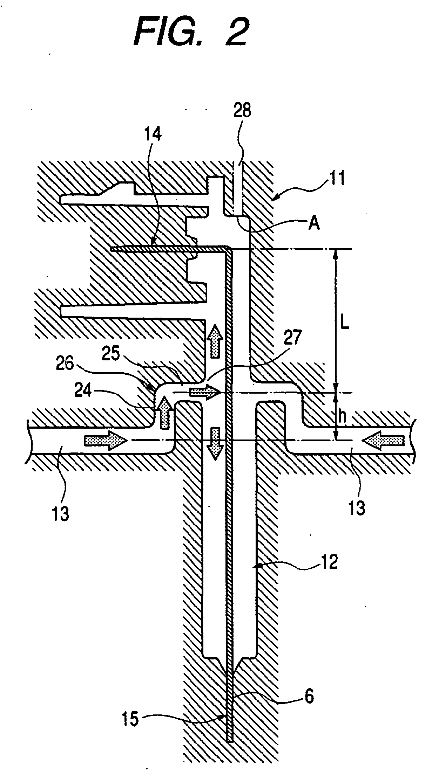

As apparent from the foregoing description, according to the above-described embodiment, an inlet port 27 of the second passage 25 is offset from the resin supply passage 13 by a distance 'h' in the longitudinal direction of the metal insert 1 as shown in Fig. 2. In other words, the first passage 24 has the height h. By setting the distance (or height) h to an appropriate value, it is possible to more precisely adjust the flow velocity of the resin to be decelerated in the crank passage 26. In general, the deceleration effect brought by the crank passage 26 is enhanced with increasing distance (or height) h. Deformation of the metal insert 1 can be effectively prevented.

However, in the case that forming the crank portion 23 induces unavoidable interfere with a plug or a connector coupled with the first connecting terminal 5, it is preferable to lower the position of the inlet port 27 of second passage 25 in an extent allowable in the design of this product while keeping the desirable distance (or height) h. In other words, the altitudinal position of flange 8 is lowered with respect to the first connecting terminal 5. Or, it may be possible to employ a crank structure according to which the flange 8 is once bent downward and then raised upward. Other modifications will be possible to secure satisfactory height.

According to the power connector 3 shown in Fig. 1A, the first end portion 4 is bent perpendicularly so as to extend in parallel with the flange 8. The distal end of the first end portion 4, serving as the first connecting terminal 5, is tightly inserted in the fixing portion 14 in the molding dies 11 as shown in Fig. 1B. when the resin pressure acts to the mid point of metal insert 1, the first end portion 4 is subjected to a thrust force and may be pulled out of fixing portion 14 of molding dies 11. This thrust force becomes large with decreasing distance L shown in Fig. 2, where L represents an offset from the inlet port 27 of the second passage 25 to the fixing portion 14 of molding dies 11.

Accordingly, if there is any possibility that metal insert 1 may be pulled out of the fixing portion 14 even when the above-described crank passage 26 can prevent the metal insert 1 from being deformed, it is preferable to provide a sub port 28 at an appropriate portion (refer to a portion A shown in Fig. 2) in the vicinity of the first end portion 4. The sub port 28 supplies auxiliary resin stream to a behind surface of the metal insert 1. The resin stream supplied from the sub port 28 prevents the first end portion 4 from being pulled out of the fixing portion 14 of molding dies 11. The position of sub port 28 is closer to the first end portion 4 compared with the inlet port 27 of the crank passage 26. Providing the sub port 28 makes it possible to let the resin stream entering from the sub port 28 reach the first end portion 4 earlier than the resin supplied from the main port (i.e., the inlet port 27 of the crank passage 26). The resin entering from the sub port 28 has a function of pushing the first end portion 4 against the thrust force acting when the resin entering from the main port collides with a front surface of the metal insert 1. Thus, it becomes possible to effectively prevent the first end portion 4 from being pulled out of the fixing portion 14 of molding dies 11.

In designing the sub port 28, it is important to determine a ratio of the sub port 28 to the main port 27 in largeness should be determined so as to realize desirable timing of the resin reaching to the first end portion 4, in addition to the injection timing of the resin,

Meanwhile, the metal insert 1 disposed in the resin injection chamber 12 is not always the same in its form. The metal insert 1 may be structurally complicated. The position, strength, and fixing structure of each metal insert 1 fixed in the molding dies 11 as well as the function of resin supplied from the main port 27 should be determined considering the shape of the metal insert. Similarly, when the sub port 28 is additionally provided, its position and opening diameter should be optimized. In any cases, providing the above-described crank passage 26 brings the effects of reducing the force acting on the metal insert 1.

### Second Embodiment

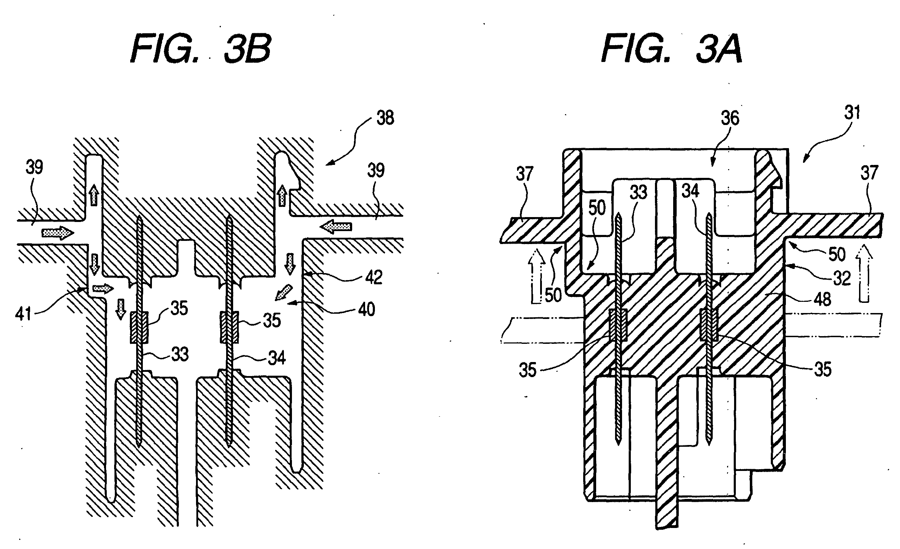

Figs. 3A and 3B show another example of the insert molded product of the present invention, which has a crank portion usable as a resin supply passage.

A power connector 31 of the second embodiment has a resin main body 32 and metal inserts 33 and 34 serving as power supply terminals which are disposed in parallel with each other so as to extend in the up-and-down direction of the connector 31. An adhesive 35 is applied to a mid portion of respective metal inserts 33 and 34. The adhesive 35 has a function of preventing each metal insert from peeling off the resin main body 32 due to molding sink.

An upper part of resin main body 32 is configured into a recessed bore with a surrounding wall. A first connecting terminal 36 of respective metal inserts 33 and 34 is located in the recessed bore of the resin main body 32. A resin flange 37, being configured into a disk shape extending in the horizontal direction, is integrally formed on an outer surface of the surrounding wall of the recessed bore formed at the upper part of resin main body 32. The position of flange 37 is higher than that of the flange 8 shown in Fig. 1A or 6A (indicated by an alternate long and two short dashes line in Fig. 3A).

Fig. 3B shows molding dies 38 used for manufacturing the power connector 31 shown in Fig. 3A. The molding dies 38 include a resin supply passage 39 extending in the horizontal direction from which resin is introduced into a resin injection chamber 40 under the condition that the metal inserts 33 and 34 are supported in this chamber. The resin supply passage 39 serves as a flange forming portion where the flange 37 of connector 31 is formed.

The resin entering from the left resin supply passage (i.e., flange forming portion) 39 passes a crank passage 41 constituting the side wall of this product before it reaches the resin injection chamber 40. The crank passage 41 decelerates the flow velocity of the resin introduced into the resin injection chamber 40. The resin entering from the right resin supply passage (flange forming portion) 39 passes a crank passage 42 utilizing the shape of this product before it reaches the resin injection chamber 40. The crank passage 42 decelerates the flow velocity of the resin introduced into the resin injection chamber 40.

Both of the crank passages 41 and 42 serve resin decelerating portions for giving an appropriate flow resistance to the resin rushing into the resin injection chamber 40. In this respect, the crank passages 41 and 42 can be also referred to as a resistance giving bent portions.

The crank passages 41 and 42 correspond to the flange 37 and side walls of the resin main body 32 which cooperatively serve as resin crank portions 50. In other words, the power connector 31 has the flange 37 being offset in the up-and-down direction from a central barrel portion 48 of resin main body 32. Similarly, in the molding dies 38, the resin supply passage 39 is offset in the up-and-down direction from the resin injection chamber 40 so as to form the crank passage 42. The crank passage 42 decelerates the resin rushing into the resin injection chamber 40.

The second embodiment brings substantially the same effects as those of the first embodiment.

### Third Embodiment

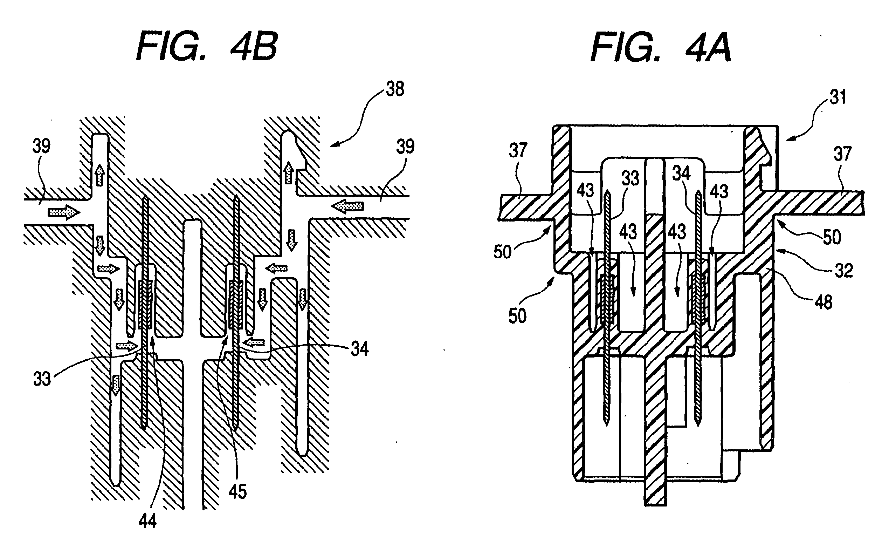

Figs. 4A and 4B show another example of the insert molded product of the present invention, which is different from the embodiment shown in Figs. 3A and 3B in that a rib structure including a number of recesses 43 extending and opened upward is employed to reduce the substantial thickness of the central barrel portion 48 of resin main body 32. The recesses 43 can be referred to as a thinning portion employed in the resin main body 32.

Providing the thickness reducing recesses 43 is effective to suppress the molding sink. The metal inserts 33 and 34 do not peel off the resin main body 32. The amount of resin used for manufacturing the connector 31 can be reduced.

According to this embodiment, as shown in Fig. 4B, the resin stream entering from the resin supply passage (i.e., flange forming portion) 39 passes a plurality of crank passages before it reaches respective resin injection chambers 44 and 45 in which the metal inserts 33 and 34 are tightly supported. These crank passages sufficiently reduce the flow velocity of the resin introduced into the resin injection chambers 44 and 45.

The third embodiment brings substantially the same effects as those of the first embodiment.

### Fourth Embodiment

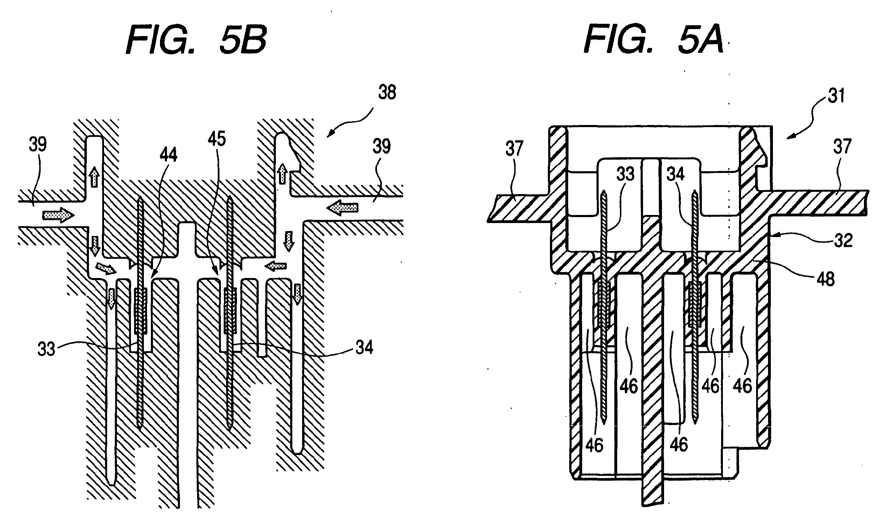

Figs. 5A and 5B show another example of the insert molded product of the present invention, which is similar to the embodiment shown in Figs. 4A and 4B in that a rib structure including a number of recesses 46 is employed to reduce the substantial thickness of the central barrel portion 48 of resin main body 32. However, unlike the recesses 43 of the third embodiment, the recesses 46 of this embodiment are opened downward.

The fourth embodiment brings substantially the same effects as those of the first embodiment.

Application of the present invention is not limited to connectors. The present invention is applicable to any other insert molded products having a metal insert molded together with a resin body.

The crank passages disclosed in the above-described embodiments are bent in a crank shape to give the flow velocity decelerating function at the portion where the resin approaches the metal insert. However, it is possible to modify each crank passage to have a bent angle smaller or larger than 90° unless the crank passage loses the above-described flow velocity decelerating function. Furthermore, it is desirable to configure the crank passage into a curved shape to increase the flow resistance and give flow velocity decelerating function. Accordingly, the resin decelerating portion of the present invention can be variously modified as long as it is provided at a portion where the resin flows into the resin injection chamber for insert molding a product under the condition that the thin metal plate is held at both ends thereof in this chamber.

## Claims

1. An insert molded member including a thin metal insert (1; 33, 34) which is fixed at both ends in a resin injection chamber (12; 40; 44, 45) defined in molding dies (11; 38),
**characterized in that**
a resistance giving bent portion (26; 41, 42) is provided in a resin supply passage connected to said resin injection chamber.

2. The insert molded member in accordance with claim 1, wherein said resistance giving bent portion is formed by a thinning portion (43; 46) of a main body of said insert molded member.

3. The insert molded member in accordance with claim 1, wherein said insert molded member is formed by a resin supplied from a sub port (28) preventing said metal insert from being pulled out of said molding dies in addition to a resin supplied from said resistance giving bent portion.

4. An insert molded product comprising a resin body and a metal insert (1; 33, 34) molded at least partly in said resin body,
**characterized in that**
said resin body has a first portion (2; 32), a second portion (8; 37), and a third portion (23; 50) intervening between said first portion and said second portion,
said first portion (2; 32) of said resin body serves as a resin injection chamber (12; 40; 44, 45) in which said metal insert is supported when said insert molded product is manufactured by insert molding,
said second portion (8; 37) of said resin body serves as a resin supply passage (13; 39) for supplying resin to said resin injection chamber when said insert molded product is manufactured by insert molding, and
said third portion (23; 50) of said resin body serves as a resin decelerating portion (26; 41, 42) for decelerating a flow velocity of said resin supplied into said resin injection chamber when said insert molded product is manufactured by insert molding.

5. The insert molded product in accordance with claim 4, wherein a rib structure including a plurality of recesses (43; 46) is employed to reduce a substantial thickness of said first portion (32) of said resin body, and said recesses (43; 46) serve as a resin decelerating portion for decelerating a flow velocity of said resin supplied into said resin injection chamber when said insert molded product is manufactured by insert molding.

6. An insert molding apparatus for manufacturing an insert molded product having a metal insert molded at least partly in a resin body,
**characterized in that**
molding dies (11, 38) for forming said insert molded product comprises:
a resin injection chamber (12; 40; 44, 45) in which the metal insert (1; 33, 34) is supported;
a resin supply passage (13; 39) for supplying resin to said resin injection chamber; and
a resin decelerating portion (26; 41, 42) intervening between said resin injection chamber and said resin supply passage for decelerating a flow velocity of said resin supplied into said resin injection chamber.

7. The insert molding apparatus in accordance with claim 6, wherein
said metal insert has a bent portion (4) being bent perpendicularly to a longitudinal direction of said metal insert and having a distal end being fixed in a fixing portion (14),
said molding dies have a sub port (28) supplying an auxiliary resin stream to a behind surface of said metal insert, and
said sub port is located closer to said bent portion (4) of said metal insert than an inlet port (27) of said resin supply passage (13) so that the resin stream entering from said sub port reaches said bent portion of said metal insert earlier than the resin supplied from the resin supply passage and pushes said bent portion of said metal insert against a thrust force acting when the resin entering from said resin supply passage collides with a front surface of said metal insert, thereby preventing said bent portion of said metal insert from being pulled out of said fixing portion of said molding dies.
